# FASCICULE DE BREVET EUROPEEN

(11) **EP 0 461 015 B1**
(45) Date de publication et mention de la délivrance du brevet: **11.09.1996**
(21) Numéro de dépôt: 91401434.5
(22) Date de dépôt: 03.06.1991
(51) Int. Cl.: G01T 3/00

(54) **Dispositif de mesure de débit de fluence neutronique**
Vorrichtung zur Messung des Neutronenflusses
Device for measuring neutron flux

(30) Priorité: 05.06.1990 FR 9006929
(43) Date de publication de la demande: 11.12.1991
(73) Titulaire: COMMISSARIAT A L'ENERGIE ATOMIQUE, 75015 Paris (FR)
(72) Inventeur: Bacconnet, Eugène, F-91460 Marcoussis (FR); Dauphin, Gérard, F-78130 Elancourt (FR)
(74) Mandataire: Poulin, Gérard

(56) Documents cités:
- DE-A- 3 437 104
- FR-A- 2 357 915
- US-A- 4 495 144
- US-A- 4 682 036

## Description

La présente invention concerne un dispositif de mesure de débit de fluence neutronique.

L'invention permet de mesurer des débits de fluence neutronique qui vont de 1 jusqu'à 10¹² neutrons.cm⁻².s⁻¹ environ (12 décades).

Elle s'applique notamment au contrôle et à la commande d'un réacteur nucléaire ainsi qu'à la réalisation de chaînes de sûreté destinées à être utilisées auprès d'un tel réacteur, en cas d'accident de ce dernier.

On rappelle qu'une chambre à fission est un détecteur de neutrons qui comporte une chambre d'ionisation et dans lequel on utilise les réactions de fission d'une matière fissile, l'uranium 235 par exemple, qui est irradiée par des neutrons lents.

Les fragments de fission de cette matière possèdent chacun une grande énergie (65 MeV et 102 MeV pour les fragments de fission d'un atome d'uranium 235) et perdent cette énergie en ionisant le gaz de la chambre d'ionisation.

Les charges électriques ainsi créées par les fragments de fission sont collectées grâce à un champ électrique établi entre des électrodes dont est pourvue la chambre, chaque fission étant à l'origine d'une impulsion de courant électrique.

Il est connu de transformer cette impulsion de courant en impulsion de tension grâce à des moyens électroniques appropriés.

On peut aussi obtenir et mesurer un courant continu moyen par sommation d'un grand nombre d'impulsions.

Une chambre à fission connue comprend :
- une enceinte, qui peut être cylindrique et qui est remplie d'un gaz approprié, et
- deux électrodes qui sont placées dans l'enceinte, qui sont électriquement isolées l'une de l'autre et qui sont séparées l'une de l'autre par une distance correspondant généralement au libre parcours moyen des fragments de fission dans le gaz considéré.

Les deux électrodes sont soit cylindriques et coaxiales soit planes (ce sont alors des plateaux).

Les faces respectives des deux électrodes, faces qui sont placées en regard l'une de l'autre, sont recouvertes d'un dépôt de matière fissile de faible épaisseur afin de permettre aux fragments de fission de sortir de ce dépôt.

En général, on utilise un dépôt d'uranium 235 dont la masse surfacique est inférieure ou égale à 2mg.cm⁻².

Le contrôle et la commande d'un réacteur nucléaire à eau pressurisée nécessite de mesurer des débits de fluence neutronique dans une gamme allant de 1 à 10¹¹ neutrons.cm⁻².s⁻¹, soit 11 décades.

Il est connu de couvrir une telle gamme de mesure en utilisant trois chaînes de mesure différentes, comportant respectivement trois détecteurs différents :
- une chaîne-source équipée de compteurs proportionnels fonctionnant en impulsions,
- une chaîne dite "intermédiaire", équipée de chambres d'ionisation à bore qui sont compensées vis-à-vis du rayonnement gamma, et
- une chaîne de puissance équipée de chambres d'ionisation à bore non compensées.

On a déjà envisagé de couvrir une gamme de mesure importante au moyen d'un seul détecteur, à savoir la chambre à fission décrite plus haut, fonctionnant suivant trois modes différents d'analyse du signal, à savoir le mode "impulsions", le mode "fluctuations" et le mode "courant".

En ce qui concerne le mode impulsions, chaque fission se produisant à l'intérieur de la chambre à fission donne naissance à une impulsion électrique.

L'ensemble des impulsions est compté et analysé par des moyens électroniques dits "à impulsions", comportant un amplificateur, un discriminateur d'amplitude et un intégrateur.

La gamme de mesure pour ce mode de fonctiomnement est de 1 à 10⁶ coups par seconde.

En ce qui concerne le mode fluctuations, lorsque le nombre de fissions par seconde, à l'intérieur de la chambre à fission, est suffisamment important (supérieur à 10⁴ fissions par seconde), ces fissions induisent un courant moyen.

L'analyse des fluctuations de ce courant et, plus précisément, la densité spectrale de puissance dans une bande déterminée du spectre des fréquences est fonction du nombre d'impulsions qui engendrent le courant, d'où la possibilité de mesurer un débit de fluence neutronique dans une gamme équivalente à l'intervalle allant de 10⁴ à 10⁹ coups par seconde.

En ce qui concerne le mode courant, on mesure le courant moyen débité par la chambre lorsque ce courant atteint une valeur acceptable et que les courants parasites dûs au rayonnement alpha de l'uranium de la chambre et au rayonnement gamma ambiant sont négligeables devant le courant dû aux fissions et donc aux neutrons.

On est ainsi capable de mesurer un débit de fluence neutronique de 10⁸ à 10¹² neutrons.cm⁻² .s⁻¹ .

Cependant, la gamme globale de mesure (9 à 10 décades) que l'on peut atteindre avec une chambre à fission classique, fonctionnant suivant les trois modes précités, est un peu trop limitée pour permettre le contrôle et la commande d'un réacteur nucléaire dans de bonnes conditions.

Si l'on favorise la sensibilité aux faibles débits de fluence neutronique, c'est au détriment de la linéarité aux forts débits.

Les solutions connues pour couvrir une gamme de mesure importante sont donc :
- la solution décrite plus haut, qui consiste à utiliser trois chaînes de mesure respectivement associées à trois détecteurs distincts, ce qui est compliqué, et
- la solution également décrite plus haut, qui consiste à utiliser une chambre à fission classique fonctionnant suivant les trois modes "impulsions", "fluctuations" et "courant".

Cette seconde solution conduit à une gamme de mesure un peu courte et il est alors nécessaire d'ajouter à la chaîne fonctionnant suivant les trois modes une chaîne de mesure supplémentaire, soit du côté des faibles débits de fluence, soit du côté des forts débits de fluence, d'où une solution également compliquée.

Une variante de la seconde solution consiste à utiliser une chambre à fission classique, qui est compensée vis-à-vis des rayonnements alpha et gamma, comme l'enseigne le document FR-A-2357915.

Ceci permet d'éviter l'utilisation du mode fluctuations mais ne permet pas d'augmenter la gamme de mesure globale d'une chambre à fission classique.

La présente invention a pour but de remédier aux inconvénients précédents en proposant un dispositif de mesure de débit de fluence neutronique qui permet de couvrir une gamme de mesure s'étendant sur 12 décades (de 1 à 10¹² neutrons.cm-².s⁻¹) en n'utilisant qu'un seul détecteur (à savoir la chambre à fission utilisée dans l'invention).

On connaît, par US-A-4 682 036, une chambre d'ionisation à bore, qui est compensée vis-à-vis des rayonnements gamma. Cette chambre comprend une partie sensible aux neutrons et comportant une électrode revêtue d'un matériau sensible aux neutrons et une autre partie sensible aux rayonnements gamma, dont la sensibilité aux neutrons est faible par comparaison avec la partie précédente. La chambre comprend également un dispositif qui soustrait les courants d'ionisation relatifs à la partie sensible aux rayonnements gamma, des courants d'ionisation relatifs à la partie sensible aux neutrons.

De façon précise, la présente invention a pour objet un dispositif de mesure de débit de fluence neutronique conformément à la revendication 1.

La présente invention a aussi pour objet un dispositif de mesure de débit de fluence neutronique conformément à la revendication 2.

En tant que matière fissile, on peut utiliser de l'uranium enrichi, à 93% par exemple, en uranium 235.

Pour que le temps de collection des charges soit le plus court possible lorsque la chambre utilisée dans l'invention fonctionne en impulsions, on utilise de préférence un milieu gazeux constitué par un mélange de gaz, par exemple l'argon additionné de 4% d'azote.

On notera que la chambre à fission utilisée dans l'invention comprend deux groupes d'électrodes, chaque groupe d'électrodes correspondant à une sortie de signaux électriques exploitables.

Avec la présente invention, pour faire des mesures de débit de fluence neutronique dans un réacteur nucléaire, il suffit donc d'établir deux Liaisons électriques à travers une paroi étanche, entre la chambre à fission, implantée au voisinage du coeur du réacteur, et les moyens électroniques de traitement des signaux, disposés à l'extérieur de l'enceinte de confinement du réacteur.

La masse surfacique du premier dépôt de matière fissile peut être comprise entre 1 et 2 mg.cm⁻².

La masse surfacique du deuxième dépôt de matière fissile peut être comprise entre 0,01 et 1 mg.cm-² mais, de préférence, elle est comprise entre 0,1 et 1 mg.cm⁻².

Selon un mode de réalisation particulier de l'invention, chaque groupe d'électrodes comprend deux électrodes dont l'une est mise à la masse et commune aux deux groupes.

Selon un autre mode de réalisation particulier, le premier groupe d'électrodes comprend au moins trois électrodes montées en parallèle afin que ce premier groupe d'électrodes, qui est destiné à un fonctionnement en impulsions et en fluctuations ou éventuellement en courant, présente une grande sensibilité aux neutrons thermiques.

Le deuxième groupe d'électrodes peut comprendre au moins deux électrodes montées en parallèle.

Selon un mode de réalisation préféré de l'invention, afin d'utiliser une technologie simple et facile à mettre en oeuvre, les électrodes des premier et deuxième groupes sont cylindriques et coaxiales.

De préférence, les électrodes des premier et deuxième groupes sont supportées, à chaque extrémité, par des supports électriquement isolants.

Ceci permet de renforcer la solidité de la chambre d'ionisation notamment pour qu'elle puisse continuer à fonctionner après un accident du réacteur dans lequel elle a été placée.

Dans une réalisation préférée de l'invention, la chambre à fission comprend en outre des anneaux de garde inter-électrodes.

Ceci permet d'obtenir une bonne Linéarité de fonctionnement en mode courant, mode suivant lequel chaque groupe d'électrode est susceptible de fonctionner.

La présente invention sera mieux comprise à la lecture de la description d'exemples de réalisation donnés ci-après à titre purement indicatif et nullement limitatif, en référence aux dessins annexés sur lesquels :
- la figure 1 est une vue en coupe schématique d'un mode de réalisation particulier de la chambre à fission utilisée dans l'invention,
- la figure 2 est une vue en coupe schématique et partielle d'un autre mode de réalisation particulier de cette chambre,
- la figure 3 est une vue schématique d'un dispositif de mesure de débit de fluence neutronique comportant la chambre à fission représentée sur la figure 1,
- la figure 4 illustre graphiquement le domaine de fonctionnement du dispositif représenté sur la figure 3, pour la comparer à cette d'un dispositif connu de mesure de débit de fluence neutronique,
- la figure 5 est une vue schématique d'un autre dispositif de mesure de débit de fluence neutronique comportant également La chambre à fission représentée sur la figure 1, et
- la figure 6 illustre graphiquement Le domaine de fonctionnement du dispositif représenté sur la figure 5.

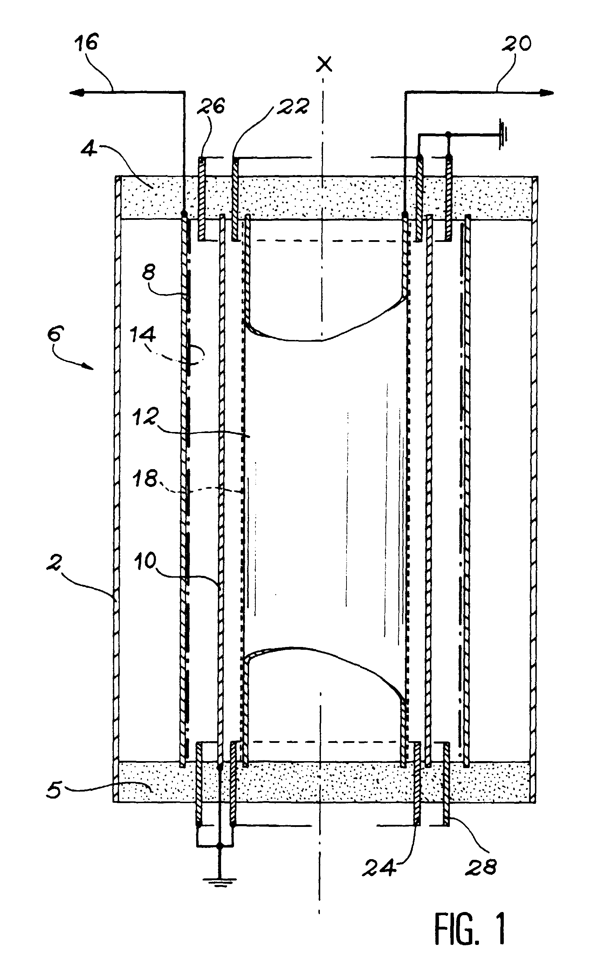

Le mode de réalisation particulier de la chambre à fission utilisée dans l'invention, qui est schématiquement représenté sur la figure 1, comprend une enceinte étanche 2 qui épouse par exemple la forme d'un cylindre de révolution d'axe X et qui est fermée en ses deux extrémités par des plaques de fermeture 4 et 5 électriquement isolantes.

Dans un mode de réalisation plus pratique non représenté, les plaques de fermeture sont métalliques et comportent des supports isolants pour les électrodes et des passages étanches isolants pour les sorties des signaux électriques.

L'enceinte 2 est remplie d'un mélange gazeux approprié, ionisable par les produits de fission résultant de la désintégration d'une matière fissile que contient la chambre et dont il sera question par la suite.

La chambre à fission 6 représentée sur la figure 1 comprend également, dans l'enceinte 2, un premier groupe d'électrodes cylindriques et coaxiales 8 et 10 et un deuxième groupe d'électrodes cylindriques et coaxiales 10 et 12, l'électrode 10 étant ainsi commune aux deux groupes.

Les électrodes 8, 10 et 12 sont coaxiales et ont l'axe X comme axe commun.

Les électrodes du premier groupe sont plus proches de la périphérie de l'enceinte 2 tandis que les électrodes du deuxième groupe sont plus proches de l'axe X de l'enceinte 2, l'électrode 10 étant comprise entre les électrodes 8 et 12.

L'électrode 8 est espacée de la paroi de l'enceinte 2 et les électrodes 8, 10 et 12 sont espacées et électriquement isolées les unes des autres.

Les extrémités de chacune des électrodes 8, 10 et 12 sont respectivement supportées par les plaques 4 et 5.

La face de l'électrode 8, face qui est située en regard de l'électrode 10, est recouverte d'un dépôt 14 de matière fissile de masse surfacique importante.

La face de l'électrode 10, face qui est en regard de l'électrode 8, peut également être recouverte d'un dépôt identique au dépôt 14.

Lors de l'utilisation de la chambre à fission 6, l'une des électrodes du premier groupe, par exemple l'électrode 8, est reliée à des moyens électroniques de mesure, non représentés, associés à ce premier groupe, à travers un passage étanche réalisé dans l'une des plaques 4 et 5 (la plaque 4 dans l'exemple de la figure 1), et par l'intermédiaire d'un câble électrique adapté 16 dont l'impédance caractéristique est de 50 ohms et dont les pertes sont faibles, tandis que l'autre électrode du premier groupe, en l'occurrence l'électrode 10, est mise à la masse.

Lorsque la chambre d'ionisation 6 est placée dans un débit de fluence de neutrons (par exemple le débit de fluence de neutrons qui est engendré dans le coeur d'un réacteur nucléaire), le deuxième groupe d'électrodes, qui est plus proche de l'axe X que le premier groupe, est soumis à un débit de fluence neutronique plus faible que celui auquel sont soumises les électrodes du premier groupe.

La face de l'électrode 12, face qui est en regard de l'électrode 10, est recouverte d'un dépôt 18 de matière fissile dont la masse surfacique est inférieure à celle du dépôt 14 relatif au premier groupe d'électrodes.

En d'autres termes, en utilisant la même matière fissile pour les deux groupes d'électrodes, l'épaisseur du dépôt 18 est inférieure à l'épaisseur du dépôt 14.

De plus, le choix de la masse surfacique du dépôt relatif au deuxième groupe d'électrodes résulte d'un compromis : cette masse surfacique est choisie de façon à :
- rendre aussi grand que possible le rapport (I neutrons)/(I gamma) du courant électrique dû aux neutrons au courant électrique dû au rayonnement gamma, courant: que l'on est susceptible de détecter grâce aux électrodes du deuxième groupe, par exemple lorsque la chambre à fission 6 est placée au voisinage du coeur d'un réacteur nucléaire, et
- optimiser la linéarité du signal électrique fourni par les électrodes du deuxième groupe, pour une plage donnée de débit de fluence neutronique, c'est-à-dire, dans le cas où la chambre à fission est placée au voisinage du coeur d'un réacteur nucléaire, pour un fonctionnement du réacteur à puissance nominale.

La face de l'électrode 10 face qui est en regard de l'électrode 12, peut également être recouverte d'un dépôt identique au dépôt 18.

Le deuxième groupe d'électrodes est susceptible de fonctionner en courant et éventuellement en impulsions.

Lors de l'utilisation de la chambre à fission 6, l'électrode 12 est reliée à des moyens électroniques de mesure, non représentés, associés au deuxième groupe d'électrodes, à travers un passage étanche réalisé dans l'une des plaques isolantes 4 et 5 (la plaque 4 dans l'exemple de la figure 1), et par l'intermédiaire d'un câble électrique 20.

Dans le cas d'un fonctionnement en courant, il suffit que le câble électrique 20 permette une bonne protection contre les parasites.

Dans le cas où un fonctionnement en impulsions est également envisagé, il convient que le câble électrique 20 présente une impédance caractéristique fixe pour le transfert des impulsions.

A titre purement indicatif et nullement limitatif,
- l'enceinte 2 est en aluminium ou en acier inoxydable,
- les plaques 4 et 5 sont en alumine ou en métal avec passages et supports isolants en alumine,
- le mélange gazeux est constitué par de l'argon additionné de 4% d'azote,
- la matière fissile (matière apte à donner lieu à des réactions de fission lorsqu'elle est irradiée par des neutrons lents) est de l'uranium enrichi à 93% en uranium 235,
- la masse surfacique du dépôt relatif au premier groupe d'électrodes est de l'ordre de 1 à 2 mg.cm⁻², et
- la masse surfacique du dépôt relatif au deuxième groupe d'électrodes est de l'ordre de 0,01 à 1 mg.cm⁻² ou, de préférence, de l'ordre de 0,1 à 1 mg/cm⁻².

Etant donné que les deux groupes d'électrodes sont susceptibles de fonctionner suivant le mode courant, les extrémités de ces électrodes sont de préférence équipées d'anneaux de garde classiques, afin de fixer sans ambiguïté la forme et la valeur du champ électrique inter-électrodes, d'éliminer les fuites électriques inter-électrodes et, de ce fait, d'obtenir une bonne linéarité pour ce mode de fonctionnement en courant.

Dans l'exemple représenté sur la figure 1, on voit deux anneaux de garde identiques 22 et 24, dont l'axe commun est l'axe X, qui traversent respectivement les plaques isolantes 4 et 5, qui sont respectivement compris entre les extrémités des électrodes 10 et 12 (et séparés de celles-ci) et qui sont mis à la masse.

On voit aussi deux autres anneaux de garde identiques 26 et 28, dont l'axe commun est l'axe X, qui traversent respectivement les plaques isolantes 4 et 5, qui sont compris entre les extrémités des électrodes 8 et 10 (et séparés de celles-ci) et qui sont également mis à la masse.

Le premier groupe d'électrodes peut comporter plus de deux électrodes recouvertes, sur les faces en regard, d'un dépôt de matière fissile de masse surfacique importante, afin de présenter une grande sensibilité aux neutrons thermiques.

Ces électrodes sont montées en parallèle : dans le premier groupe, les électrodes reliées aux moyens électroniques de mesure associés à ce premier groupe alternent avec des électrodes mises à la masse.

De même, si besoin est, le deuxième groupe d'électrodes peut comporter deux ou plus de deux électrodes recouvertes, sur une ou deux des faces en regard, d'un dépôt de matière fissile dont la masse surfacique est choisie comme on l'a expliqué plus haut.

Dans le deuxième groupe, toutes ces électroces sont alors également montées en parallèle : des électrodes reliées aux moyens électroniques de mesure associés au deuxième groupe alternent avec des électroces mises à la masse.

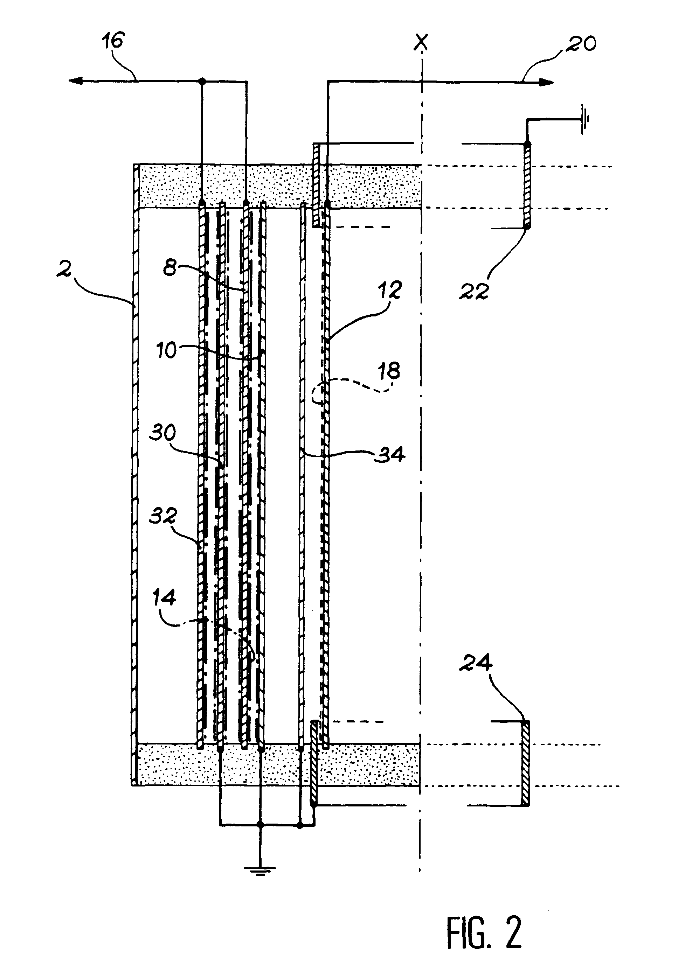

Tout ceci est illustré par la figure 2 sur laquelle la chambre à fission 6 de la figure 1 a été modifiée : on voit un premier groupe d'électrodes cylindriques et coaxiales comprenant les électrodes 8 et 10 et, en outre, des électrodes 30 et 32 comprises entre la paroi de l'enceinte et l'électrode 8, l'électrode 32 étant la plus proche de cette paroi.

Les faces des électrodes 30 et 32, faces qui sont tournées vers l'axe X commun aux électrodes 8, 10, 30 et 32, ainsi que les faces des électrodes 8, 10 et 30 tournées vers l'extérieur, portent un dépôt de matière fissile identique au dépôt 14.

Les électrodes 8 et 32 sont reliées au câble 16 et les électrodes 10 et 30 sont mises à la masse.

Dans l'exemple représenté sur la figure 2, le deuxième groupe d'électrodes comporte l'électrode 12 et une électrode 34 comprise entre les électrodes 10 et 12.

Toutes les électrodes sont cylindriques et coaxiales et leur axe est l'axe X.

L'électrode 12 est reliée au câble 20 et l'électrode 34 est mise à la masse.

On utilise encore les anneaux de garde 22 et 24 mis à la masse, les anneaux 22 et 24 étant compris entre les électrodes 12 et 34.

On va maintenant décrire deux dispositifs de mesure de débit de fluence neutronique qui utilisent une chambre à fission conforme à l'invention, par exemple celle qui est représentée sur la figure 1.

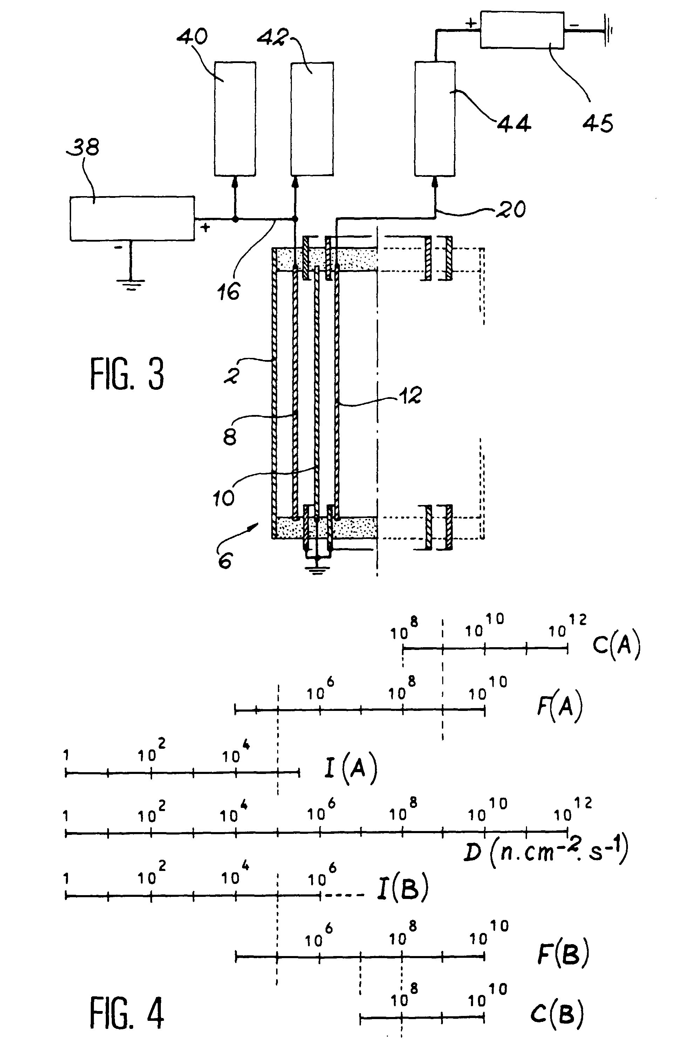

Le premier dispositif est schématiquement représenté sur la figure 3 et fonctionne suivant les modes inpulsions, fluctuations et courant.

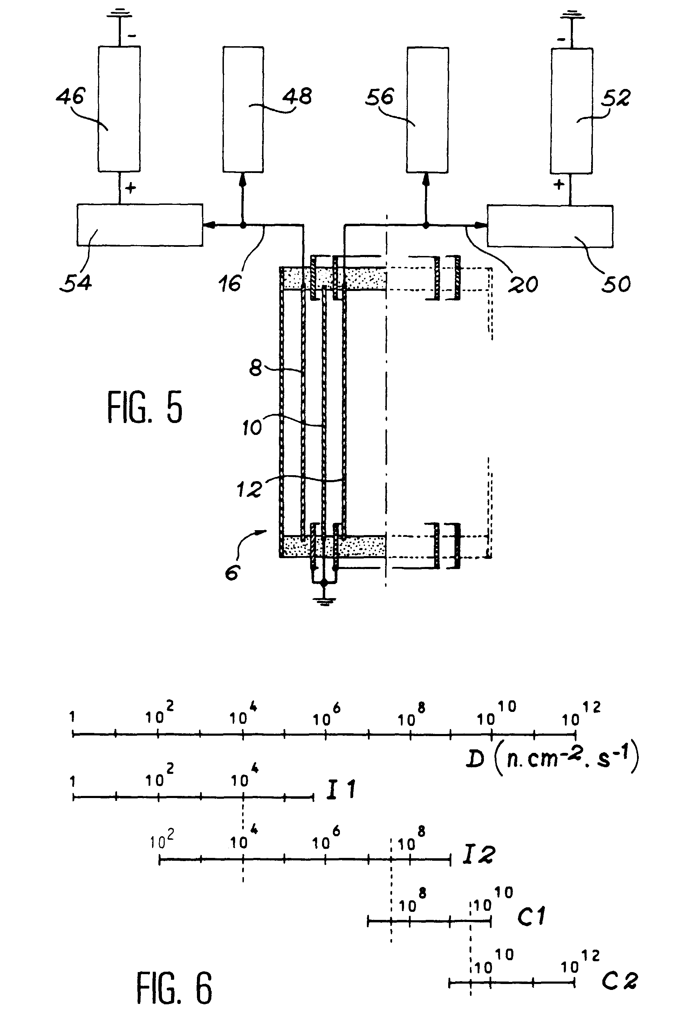

Le deuxième dispositif est schématiquement représenté sur la figure 5 et fonctionne suivant les modes inpulsions et courant.

Suivant le type de fonctionnement choisi, il peut être nécessaire d'adapter les épaisseurs des dépôts de matiére fissile, ainsi que le nombre des électrodes et les espaces interélectrodes.

Le dispositif schématiquement représenté sur la figure 3 comprend, outre la chambre à fission 6 de la figure 1, deux sources de haute tension continue 38 et 45, des moyens de mesure de débit de fluence neutronique 40 qui fonctionnent en impulsions, des moyens de mesure de débit de fluence neutronique 42 qui fonctionnent en fluctuations et des moyens de mesure de débit de fluence neutronique 44 qui fonctionnent en courant.

Les moyens 40, 42, 44 sont munis de moyens de visualisation des valeurs des débits de fluence neutronique mesurés.

On utilise le premier groupe d'électrodes pour le fonctionnement en impulsions et pour le fonctionnement en fluctuations et le deuxième groupe d'électrodes est utilisé pour le fonctionnement en courant.

Au câble 16, correspondant au premier groupe d'électrodes, sont connectés les moyens 40 et 42 ainsi que la borne positive de la source 38 dont la borne négative est mise à la masse.

Les moyens 44 sont reliés au câble 20 qui correspond au deuxième groupe d'électrodes, et montés en série avec la source de haute tension continue 45 dont la borne négative est reliée à la masse.

La polarisation positive de l'électrode 12 se fait à travers les moyens 44 par la source de haute tension continue 45.

Dans une variante de montage non représentée, afin d'économiser une source de haute tension, l'électrode 8 est mise à la masse ; l'électrode 10 est connectée, par l'intermédiaire du câble 16, à la source 38 et aux moyens 40 et 42, et l'électrode 12 est reliée à la masse par l'intermédiaire des moyens 44.

L'utilisateur du dispositif représenté sur la figure 3 passe d'un mode à l'autre suivant les valeurs des débit de fluence neutronique mesurés.

On voit sur la figure 4 que, pour couvrir la gamme des débits de fluence neutronique D allant de 1 à 10¹¹ neutrons.cm⁻².s⁻¹ avec le dispositif représenté sur la figure 3 (graphiques A de la figure 4), on travaille
- en mode impulsions I de 1 à 10⁵ neutrons.cm⁻².s⁻¹,
- en mode fluctuations F de 10⁵ à 10⁹ neutrons.cm⁻².s⁻¹ (avec la possibilité d'aller jusqu'à 10¹⁰ neutrons.cm⁻².s⁻¹), et
- en mode courant C de 10⁹ à 10¹¹ neutrons.cm⁻².s⁻¹ (avec la possibilité d'aller jusqu'à 10¹² neutrons.cm⁻².s⁻¹).

Par comparaison, avec une chambre à fission classique de type CFUL01 (graphiques B de la figure 4), on travaille
- en mode impulsions I de 1 à 10⁵ neutrons.cm⁻².s⁻¹ (avec la possibilité d'aller jusqu'à 10⁶ neutrons.cm⁻².s⁻¹),
- en mode fluctuations F de 10⁵ à 10⁸ neutrons.cm⁻².s⁻¹ (avec la possibilité d'aller jusqu'à 10¹⁰ neutrons.cm⁻².s⁻¹), et
- en mode courant C de 10⁸ à 10¹⁰ neutrons.cm⁻².s ⁻¹.

Le dispositif schématiquement représenté sur la figure 5 comprend, outre la chambre à fission 6 de la figure 1, une première source de haute tension continue 46, des moyens de mesure de débit de fluence neutronique fonctionnant en impulsions 48, des moyens de mesure de débit de fluence neutronique fonctionnant en courant 50, une deuxième source de haute tension continue 52, des moyens de mesure de débit de fluence neutronique fonctionnant en courant 54 et des moyens de mesure de débit de fluence neutronique fonctionnant en impulsions 56.

Les moyens 48, 50, 54 et 56 sont munis de moyens de visualisation des valeurs des débits de fluence neutronique mesurés.

Au câble 16, correspondant au premier groupe d'électrodes de la chambre à fission 6, sont connectés les moyens 48 et 54.

L'électrode 8 de la chambre à fission 6 est polarisée positivement par la source 46 à travers les moyens 54, la borne négative de la source 46 étant mise à la masse.

Au câble 20, correspondant au deuxième groupe d'électrodes de la chambre à fission 6, sont connectés les moyens 50 et 56.

L'électrode 12 de la chambre à fission 6 est polarisée positivement par la source 52 à travers les moyens 50, la borne négative de la source 52 étant mise à la masse.

Dans le cas du dispositif de la figure 5, on utilise donc chaque groupe d'électrodes pour des mesures en mode impulsions et des mesures en mode courant.

On voit sur la figure 6 que, pour couvrir la gamme des débits de fluence neutronique D allant de 1 à 10¹² neutrons.cm⁻².s⁻¹ avec le dispositif représenté sur la figure 5, on travaille
- en mode impulsions, en utilisant le premier groupe d'électrodes (I1), de 1 a 10⁴ neutrons.cm⁻².s⁻¹ (avec la possibilité d'aller jusqu'à 10⁵ neutrons.cm⁻² .s⁻¹,
- en mode impulsions, en utilisant le deuxième groupe d'électrodes (I2), de 10⁴ à 5x10⁷ neutrons.cm⁻².s¹ (avec la possibilité d'aller jusqu'à 10⁸ neutrons.cm⁻².s⁻¹),
- en mode courant, en utilisant le premier groupe d'électrodes (C1), de 5x10⁷ à 5x10⁹ neutrons.cm⁻².s⁻¹ (avec la possibilité d'aller jusqu'à 10¹⁰ neutrons.cm⁻².s⁻¹), et
- en mode courant, en utilisant le deuxième groupe d'électrodes (C2), de 5x10⁹ à 10¹² neutrons.cm⁻².s⁻¹.

L'espace interélectrodes peut être identique pour les deux groupes d'électrodes, mais il peut aussi être différent.

En général, les électrodes du deuxième groupe seront plus rapprochées que celles du premier groupe, afin d'améliorer le rapport I neutrons /I gammas.

## Revendications

1. Dispositif de mesure de débit de fluence neutronique comprenant :
- une chambre à fission (6),
- des moyens (38, 45, 46, 52) de polarisation des électrodes de la chambre, et
- des moyens électroniques (40-42-44, 48-50-54-56) de traitement des signaux électriques fournis par cette chambre, prévus pour déterminer le débit de fluence neutronique,
dispositif dans lequel la chambre à fission (6) est une chambre à fission, à grande gamme de mesure, comportant une enceinte (2) remplie d'un milieu gazeux et, dans cette enceinte, une pluralité d'électrodes recouvertes d'une matière fissile, les électrodes étant réparties en deux groupes, à savoir :
- un premier groupe d'électrodes (8-10, 8-10-30-32) proches de la périphérie de l'enceinte, au moins une électrode (8, 8-30-32) de ce premier groupe étant recouverte d'un premier dépôt (14) de matière fissile de grande masse surfacique, et
- un deuxième groupe d'électrodes (10-12, 10-12-34) proches du centre de l'enceinte et ainsi soumises à un débit de fluence neutronique inférieur à celui auquel sont soumis Les électrodes du premier groupe, au moins une électrode (12) du deuxième groupe étant recouverte d'un deuxième dépôt (18) de matière fissile dont la masse surfacique est inférieure à celle du premier dépôt (14) et choisie de façon
- d'une part, à rendre aussi grand que possible le rapport de courants électriques respectivement dûs à des neutrons et à des rayonnements gamma parasites, courants que l'on est susceptible de détecter par l'intermédiaire des électrodes du deuxième groupe, et
- d'autre part, à optimiser la linéarité du signal fourni par les électrodes (10-12, 10-12-34) de ce deuxième groupe pour une plage déterminée de débit de fluence neutronique et
dans lequel les moyens électroniques de traitement comprennent :
- des moyens de mesure de débit de fluence neutronique (40) qui sont aptes à fonctionner en impulsions et qui sont associés au premier groupe d'électrodes,
- des moyens de mesure de débit de fluence neutronique (42) qui sont aptes à fonctionner en fluctuations et qui sont associés au premier groupe d'électrodes, et
- des moyens de mesure de débit de fluence neutronique (44) qui sont aptes à fonctionner en courant et qui sont associés au deuxième groupe d'électrodes.

2. Dispositif de mesure de débit de fluence neutronique comprenant :
- une chambre à fission (6),
- des moyens (38, 45, 46, 52) de polarisation des électrodes de la chambre, et
- des moyens électroniques (40-42-44, 48-50-54-56) de traitement des signaux électriques fournis par cette chambre, prévus pour déterminer le débit de fluence neutronique,
dispositif dans lequel la chambre à fission (6) est une chambre à fission, à grande gamme de mesure, comportant une enceinte (2) remplie d'un milieu gazeux et, dans cette enceinte, une pluralité d'électrodes recouvertes d'une matière fissile, les électrodes étant réparties en deux groupes, à savoir :
- un premier groupe d'électrodes (8-10, 8-10-30-32) proches de la périphérie de l'enceinte, au moins une électrode (8, 8-30-32) de ce premier groupe étant recouverte d'un premier dépôt (14) de matière fissile de grande masse surfacique, et
- un deuxième groupe d'électrodes (10-12, 10-12-34) proches du centre de l'enceinte et ainsi soumises à un débit de fluence neutronique inférieur à celui auquel sont soumis Les électrodes du premier groupe, au moins une électrode (12) du deuxième groupe étant recouverte d'un deuxième dépôt (18) de matière fissile dont la masse surfacique est inférieure à celle du premier dépôt (14) et choisie de façon
- d'une part, à rendre aussi grand que possible le rapport de courants électriques respectivement dûs à des neutrons et à des rayonnements gamma parasites, courants que l'on est susceptible de détecter par l'intermédiaire des électrodes du deuxième groupe, et
- d'autre part, à optimiser la linéarité du signal fourni par les électrodes (10-12, 10-12-34) de ce deuxième groupe pour une plage déterminée de débit de fluence neutronique
et dans lequel les moyens électroniques de traitement comprennent :
- des premiers moyens de mesure de débit de fluence neutronique (48) qui sont aptes à fonctionner en impulsions et qui sont associés au premier groupe d'électrodes,
- des deuxièmes moyens de mesure de débit de fluence neutronique (56) qui sont aptes à fontionner en impulsions et qui sont associés au deuxième groupe d'électrodes et prévus pour mesurer des débits de fluence neutronique supérieurs à ceux qui sont mesurés à l'aide des premiers moyens (48),
- des troisièmes moyens de mesure de débit de fluence neutronique (54) qui sont aptes à fonctionner en courant et qui sont associés au premier groupe d'électrodes, et prévus pour mesurer des débits de fluence neutronique supérieurs à ceux qui sont mesurés à l'aide des deuxièmes moyens (56), et
- des quatrièmes moyens de mesure de débit de fluence neutronique (50) qui sont aptes à fonctionner en courant et qui sont associés au deuxième groupe d'électrodes et prévus pour mesurer des débits de fluence supérieurs à ceux qui sont mesurés à l'aide des troisièmes moyens.

3. Chambre selon l'une quelconque des revendications 1 et 2, caractérisée en ce que la masse surfacique du premier dépot (14) de matière fissile est comprise entre 1 et 2 mg·cm⁻².

4. Chambre selon l'une quelconque des revendications 1 à 3, caractérisée en ce que la masse surfacique du deuxième dépôt (18) de matière fissile est comprise entre 0,01 et 1 mg.cm⁻².

5. Chambre selon la revendication 4, caractérisée en ce que la masse surfacique du deuxième dépôt (18) de matière fissile est comprise entre 0,1 et 1 mg.cm⁻².

6. Chambre selon l'une quelconque des revendications 1 à 5, caractérisée en ce que chaque groupe d'électrodes comprend deux électrodes (8-10, 10-12) dont l'une (10) est mise à la masse et commune aux deux groupes.

7. Chambre selon l'une quelconque des revendications 1 à 5, caractérisée en ce que le premier groupe d'électrodes comprend au moins trois électrodes (8, 10, 30, 32) montées en parallèle.

8. Chambre selon l'une quelconque des revendications 1 à 5 et 7, caractérisée en ce que le deuxième groupe d'électrodes comprend au moins deux électrodes (12, 34) montées en parallèle.

9. Chambre selon l'une quelconque des revendications 1 à 8, caractérisée en ce que les électrodes des premier et deuxième groupes sont cylindriques et coaxiales.

10. Chambre selon l'une quelconque des revendications 1 à 9, caractérisée en ce que les électrodes des premier et deuxième groupes sont supportées, à chaque extrémité, par des supports (4, 5) électriquement isolants.

11. Chambre selon l'une quelconque des revendications 1 à 10, caractérisée en ce qu'elle comprend en outre des anneaux de garde inter-électrodes (22, 24, 26, 28).

## Patentansprüche

1. Vorrichtung zur Messung des Neutronenflusses, umfassend:
- eine Fissionskammer (6),
- Einrichtungen (38, 45, 46, 52) zum Vorspannen der Elektroden der Kammer, und
- elektronische Einrichtungen (40-42-44, 48-50-54-56) zur Verarbeitung der durch diese Kammer gelieferten elektrischen Signale, vorgesehen zur Bestimmung des Neutronenflusses,
Vorrichtung bei der die Fissionskammer eine Fissionskammer (6) mit einem großen Meßbereich ist, umfassend einen Behälter (2), gefüllt mit einem gasförmigen Medium, und in diesem Behälter eine Vielzahl Elektroden, überzogen mit einem fissiblen bzw. spaltbaren Material, wobei die Elektroden in zwei Gruppen geteilt sind, nämlich:
- eine erste Gruppe von Elektroden (8-10, 8-10-30-32) nahe dem Rand des Behälters, wobei wenigstens eine Elektrode (8, 8-30-32) dieser ersten Gruppe überzogen ist mit einer ersten Abscheidung (14) aus Material mit großer flächenbezogener Masse, und
- eine zweite Gruppe von Elektroden (10-12, 10-12-34) nahe der Mitte des Behälters und somit einem kleineren Neutronenfluß ausgesetzt als dem, dem die Elektroden der ersten Gruppe ausgesetzt sind, wobei wenigstens ein Elektrode (12) der zweiten Gruppe überzogen ist mit einer zweiten Abscheidung (18) aus spaltbarem Material, deren flächenbezogene Masse kleiner ist als die der ersten Abscheidung (14) und entsprechend gewahlt wird, um
- einerseits die durch Neutronen und parasitäre Gamma-Stahlen hervorgerufenen elektrischen Ströme so groß wie möglich zu machen, wobei man diese Ströme mittels Elektroden der zweiten Gruppe erfassen kann, und
- andererseits die Linearitat des durch die Elektroden (10-12, 10-12-34) dieser zweiten Gruppe für einen bestimmten Neutronenflußbereich gelieferten Signals zu optimieren,
und bei der die elektronischen Verarbeitungseinrichtungen umfassen:
- Neutronenfluß-Meßeinrichtungen (40), die mit Impulsen funktionieren können und die mit der ersten Elektrodengruppe verbunden sind,
- Neutronenfluß-Meßeinrichtungen (42), die mit Fluktuationen funktionieren können und die mit der ersten Elektrodengruppe verbunden sind, und
- Neutronenfluß-Meßeinrichtungen (44), die mit Strom arbeiten können und die mit der zweiten Elektrodengruppe verbunden sind.

2. Vorrichtung zur Messung des Neutronenflusses, umfassend:
- eine Fissionskammer (6),
- Einrichtungen (38, 45, 46, 52) zum Vorspannen der Elektroden der Kammer, und
- elektronische Einrichtungen (40-42-44, 48-50-54-56) zur Verarbeitung der durch diese Kammer gelieferten elektrischen Signale, vorgesehen zur Bestimmung des Neutronenflusses,
Vorrichtung bei der die Fissionskammer eine Fissionskammer (6) mit einem großen Meßbereich ist, umfassend einen Behälter (2), gefüllt mit einem gasförmigen Medium, und in diesem Behälter ein Vielzahl Elektroden, überzogen mit einem fissiblen bzw. spaltbaren Material, wobei die Elektroden in zwei Gruppen geteilt sind, namlich:
- eine erste Gruppe von Elektroden (8-10, 8-10-30-32) nahe dem Rand des Behälters, wobei wenigstens eine Elektrode (8, 8-30-32) dieser ersten Gruppe überzogen ist mit einer ersten Abscheidung (14) aus Material mit großer flächenbezogener Masse, und
- eine zweite Gruppe von Elektroden (10-12, 10-12-34) nahe der Mitte des Behälters und somit einem kleineren Neutronenfluß ausgesetzt als dem, dem die Elektroden der ersten Gruppe ausgesetzt sind, wobei wenigstens ein Elektrode (12) der zweiten Gruppe überzogen ist mit einer zweiten Abscheidung (18) aus spaltbarem Material, deren flächenbezogene Masse kleiner ist als die der ersten Abscheidung (14) und entsprechend gewählt wird, um
- einerseits die durch Neutronen und parasitäre Gamma-Stahlen hervorgerufenen elektrischen Ströme so groß wie möglich zu machen, wobei man diese Ströme mittels Elektroden der zweiten Gruppe erfassen kann, und
- andererseits die Linearität des durch die Elektroden (10-12, 10-12-34) dieser zweiten Gruppe für einen bestimmten Neutronenflußbereich gelieferten Signals zu optimieren,
und bei der die elektronischen Verarbeitungseinrichtungen umfassen:
- erste Neutronenfluß-Meßeinrichtungen (48), die mit Impulse funktionieren können und die mit der ersten Elektrodengruppe verbunden sind,
- zweite Neutronenfluß-Meßeinrichtungen (56), die mit Impulsen funktionieren können und die mit der zweiten Elektrodengruppe verbunden sind und vorgesehen sind, Neutronenflüsse zu messen, die größer sind als diejenigen, die mit Hilfe der ersten Einrichtungen (48) gemessen wurden,
- dritte Neutronenfluß-Meßeinrichtungen (54), die mit Strom funktionieren können und die mit der dritten Elektrodengruppe verbunden sind und vorgesehen sind, Neutronenflüsse zu messen, die größer sind als diejenigen, die mit Hilfe der zweiten Einrichtungen (56) gemessen erden, und
- vierte Neutronenfluß-Meßeinrichtungen (50), die mit Strom funktionieren können und die mit der zweiten Elektrodengruppe verbunden sind und vorgesehen sind, Neutronenflüsse zu messen, die größer sind als diejenigen, die mit Hilfe der dritten Einrichtungen gemessen werden.

3. Kammer nach einem der Ansprüche 1 und 2, dadurch gekennzeichnet, daß die flächenbezogene Masse der ersten Abscheidung (14) aus fissiblem bzw. spaltbarem Material enthalten ist zwischen 1 und 2 mg.cm⁻².

4. Kammer nach einem der Ansprüche 1 bis 3, dadurch gekennzeichnet, daß die flächenbezogene Masse der zweiten Abscheidung (18) aus fissiblem bzw. spaltbarem Material enthalten ist zwischen 0,01 und 1 mg.cm⁻².

5. Kammer nach Anspruch 4, dadurch gekennzeichnet, daß die flächenbezogene Masse der zweiten Abscheidung (18) aus fissiblem bzw. spaltbarem Material enthalten ist zwischen 0,1 und 1 mg . cm⁻².

6. Kammer nach einem der Ansprüche 1 bis 5, dadurch gekennzeichnet, daß jede Elektrodengruppe zwei Elektroden umfaßt (8-10, 10-12), von denen eine an Masse gelegt wird und beiden Gruppen gemein ist.

7. Kammer nach einem der Ansprüche 1 bis 5, dadurch gekennzeichnet, daß die erste Elektrodengruppe wenigstens drei parallelgeschaltete Elektroden (8, 10, 30, 32) umfaßt.

8. Kammer nach einem der Ansprüche 1 bis 5 und 7, dadurch gekennzeichnet, daß die zweite Elektrodengruppe wenigstens zwei parallelgeschaltete Elektroden (12, 34) umfaßt.

9. Kammer nach einem der Ansprüche 1 bis 8, dadurch gekennzeichnet, daß die Elektroden der ersten und der zweiten Gruppe zylindrisch und koaxial sind.

10. Kammer nach einem der Anspruche 1 bis 9, dadurch gekennzeichnet, daß die Elektroden der ersten und der zweiten Gruppe an jedem Ende durch elektrisch isolierende Träger (4, 5) gehalten werden.

11. Kammer nach einem der Anspruche 1 bis 10, dadurch gekennzeichnet, daß sie außerdem zwischen den Elektroden Potentialringe (22, 24, 26, 28) umfaßt.

## Claims

1. Apparatus for measuring the neutron flux density comprising a fission chamber (6), means (38, 45, 46, 52) for polarizing the electrodes of the chamber and electronic means (40-42-44, 48-50-54-56) for processing electrical signals supplied by said chamber and serving to determine the neutron flux density, wherein the fission chamber (6) is a fission chamber having a wide measuring range, comprising an enclosure (2) filled with a gaseous medium and, in said enclosure, a plurality of electrodes covered with a fissile material, the electrodes being distributed in two groups, namely:
- a first group of electrodes (8-10, 8-10-30-32) close to the periphery of the enclosure, at least one electrode (8, 8-30-32) of said first group being covered by a first deposit (14) of fissile material having a large surface mass, and
- a second group of electrodes (10-12, 10-12-34) close to the centre of the enclosure and being exposed to a neutron flux field below that to which are exposed the electrodes of the first group, at least one electrode (12) of the second group being covered with a second deposit (18) of fissile material, whose surface mass is below that of the first deposit (14) and chosen
- on the one hand so as to make as large as possible the ratio of the electric currents respectively due to neutrons and parasitic gamma rays, said currents being detectable by means of the electrodes of the second group and
- on the other hand, optimizing the linearity of the signal supplied by the electrodes (10-12, 10-12-34) of said second group for a given neutron flux density, wherein the electronic processing means comprise:
neutron flux density measuring means (40) able to operate in the pulse mode and associated with the first electrode group,
neutron flux density measuring means (42) able to operate in the fluctuation mode and associated with the first electrode group and
neutron flux density measuring means (44) able to operate in the current mode and associated with the second electrode group.

2. Device for measuring the neutron flux density comprising a fission chamber (6), means (38, 45, 46, 52) for polarizing the electrodes of the chamber and electronic means (40-42-44, 48-50-54-56) for processing electric signals supplied by said chamber and serving to determine the neutron flux density, wherein the fission chamber (6) is a fission chamber having a wide measuring range, comprising an enclosure (2) filled with a gaseous medium and, in said enclosure, a plurality of electrodes covered with a fissile material, the electrodes being distributed in two groups, namely:
- a first group of electrodes (8-10, 8-10-30-32) close to the periphery of the enclosure, at least one electrode (8, 8-30-32) of said first group being covered by a first deposit (14) of fissile material having a large surface mass, and
- a second group of electrodes (10-12, 10-12-34) close to the centre of the enclosure and being exposed to a neutron flux field below that to which are exposed the electrodes of the first group, at least one electrode (12) of the second group being covered with a second deposit (18) of fissile material, whose surface mass is below that of the first deposit (14) and chosen
- on the one hand so as to make as large as possible the ratio of the electric currents respectively due to neutrons and parasitic gamma rays, said currents being detectable by means of the electrodes of the second group and
- on the other hand, optimizing the linearity of the signal supplied by the electrodes (10-12, 10-12-34) of said second group for a given neutron flux density, wherein the electronic processing means comprise:
- first means for measuring the neutron flux density (48) able to operate in the pulse mode and which are associated with the first group of electrodes,
- second means for measuring the neutron flux density (48) able to operate in the pulse mode and which are associated with the second group of electrodes and serve to measure neutron flux densities above those measured with the aid of the first means (48),
- third means for measuring the neutron flux density (54) able to operate in the current mode and which are associated with the first group of electrodes and serve to measure neutron flux densities above those measured with the aid of the second means (56), and
- fourth means for measuring the neutron flux density (50) and able to operate in the current mode and which are associated with the second group of electrodes and serve to measure flux densities above those measured with the aid of the third means.

3. Chamber according to either of the claims 1 and 2, characterized in that the surface mass of the first fissile material deposit (14) is between 1 and 2 mg.cm⁻².

4. Chamber according to any one of the claims 1 to 3, characterized in that the surface mass of the second fissile material deposit (18) is between 0.01 and 1 mg.cm⁻².

5. Chamber according to claim 4, characterized in that the surface-mass of the second fissile material deposit (18) is between 0.1 and 1 mg.cm ².

6. Chamber according to any one of the claims 1 to 5, characterized in that each electrode group comprises two electrodes (8-10, 10-12), whereof one (10) is earthed and is common to both groups.

7. Chamber according to any one of the claims 1 to 5, characterized in that the first electrode group comprises at least three, parallel-connected electrodes (8, 10, 30, 32).

8. Chamber according to any one of the claims 1 to 5 and 7, characterized in that the second electrode group comprises at least two, parallel-connected electrodes (12, 34).

9. Chamber according to any one of the claims 1 to 8, characterized in that the electrodes of the first and second groups are cylindrical and coaxial.

10. Chamber according to any one of the claims 1 to 9, characterized in that the electrodes of the first and second groups are supported at each end by electrically insulating supports (4, 5).

11. Chamber according to any one of the claims 1 to 10, characterized in that it also comprises interelectrode guard rings (22, 24, 26, 28).
